# EUROPÄISCHE PATENTSCHRIFT

(11) **EP 3 715 979 B1**
(45) Veröffentlichungstag und Bekanntmachung des Hinweises auf die Patenterteilung: **02.02.2022**
(21) Anmeldenummer: 20166205.3
(22) Anmeldetag: 27.03.2020
(51) Int. Cl.: G05B 19/409, G06F 21/35, H04W 12/08, G06F 21/60, G06F 21/62

(54) **ZUGRIFFSSTEUERUNGSSYSTEM ZUR STEUERUNG EINES ZUGRIFFS EINES NUTZERS AUF EINE ODER MEHRERE BETRIEBSFUNKTIONEN EINER TECHNISCHEN ANLAGE**
ACCESS CONTROL SYSTEM FOR CONTROLLING THE ACCESS OF A USER TO ONE OR MORE OPERATING FUNCTIONS OF A TECHNICAL SYSTEM
SYSTÈME DE COMMANDE D'ACCÈS PERMETTANT DE COMMANDER UN ACCÈS D'UN UTILISATEUR À AU MOINS UNE FONCTION DE FONCTIONNEMENT D'UNE INSTALLATION TECHNIQUE

(30) Priorität: 28.03.2019 DE 102019108049
(43) Veröffentlichungstag der Anmeldung: 30.09.2020
(73) Patentinhaber: Pilz GmbH & Co. KG, 73760 Ostfildern (DE)
(72) Erfinder: Zell, Christoph, 73760 Ostfildern (DE); Fleiner, Jürgen, 73760 Ostfildern (DE); Schuchardt, Raphael, 73760 Ostfildern (DE); Schuster, Peter, 73760 Ostfildern (DE); Friesen, Waldemar, 73760 Ostfildern (DE)
(74) Vertreter: Witte, Weller & Partner Patentanwälte mbB

(56) Entgegenhaltungen:
- EP-A2- 2 034 378
- DE-A1-102016 120 306
- DE-A1-102017 103 741

## Beschreibung

Die vorliegende Erfindung betrifft ein Zugriffssteuerungssystem zur Steuerung eines Zugriffs eines Nutzers auf eine oder mehrere Betriebsfunktionen einer technischen Anlage, insbesondere zur sicheren Betriebsartenwahl an der technischen Anlage, eine Zugriffssteuerungseinrichtung sowie ein entsprechendes Zugriffssteuerungsverfahren.

Aus dem Stand der Technik sind Zugriffssteuerungen an technischen Anlagen, wie bspw. Werkzeugmaschinen, mittels eines oder mehrerer Schlüsselschalter bekannt. Über diese Schlüsselschalter können gezielt einzelne Betriebsarten einer Maschine im Sinne der europäischen Richtlinien und Normen aktiviert werden.

DE 10 2007 041 768 A1 offenbart bspw. eine Werkzeugmaschine, bei der die Daten bezüglich der Zugriffssteuerung von einem mobilen Datenträger bereitgestellt werden. Die Werkzeugmaschine weist ein Lesegerät auf, um die Daten des mobilen Datenträgers über eine Funkschnittstelle, beispielsweise auf Basis von RFID-Technologie, auszulesen. Gegenüber einfachen Schlüsselschaltern können auf diese Weise auch umfangreichere Daten für die Zugriffssteuerung bereitgestellt werden, so dass auch komplexere Zugriffssteuerungen, beispielsweise mit einer Vielzahl von unterschiedlichen Berechtigungsstufen, realisiert werden können. Damit ist es möglich, genau zu spezifizieren, welcher Nutzer an welcher Werkzeugmaschine welche Betriebsfunktion ausführen darf. Der Einsatz von Funktechnologie bei der Zugriffssteuerung bietet zudem den Vorteil einer besseren Handhabbarkeit und einfacheren Schlüsselverwaltung. Ebenso ist eine Funklösung weniger anfällig gegen mechanische Störungen oder Verschmutzungen, wie sie im industriellen Umfeld auftreten können.

DE 10 2016 120306 A1 und DE 10 2017 103741 A1 zeigen weiteren Stand der Technik.

Unabhängig von der Art der Zugriffssteuerung muss sowohl bei einem Schlüsselschalter als auch bei einer Funklösung sichergestellt werden, dass eine einmal übertragene Berechtigung aktuell und gültig ist, d.h. es muss festgestellt werden, ob ein Schlüssel noch ordnungsgemäß "gesteckt" ist. Während dies bei einem Schlüsselschalter über eine mechanische Einrichtung einfach zu realisieren ist, sind für Funklösungen besondere Maßnahmen zu treffen.

Eine Möglichkeit besteht darin, einen Antennentest durchzuführen, bei dem die Antenne der Leseeinrichtung kurzzeitig ausgeschaltet wird und gleichzeitig der Versuch unternommen wird, den Schlüssel bzw. den mobilen Datenträger auszulesen. Schlägt der Versuch fehl, wird ein ordnungsgemäßer Betrieb angenommen. Problematisch hierbei ist jedoch, dass ein zusätzlicher Hardwareaufwand notwendig ist, um die Antenne abschalten zu können. Ebenso ist ein erhöhter Aufwand bei der Implementierung einer Sicherheitsanwendung zu erwarten, da der Antennentest in die Sicherheitsanwendung integriert werden muss und die Sicherheitsanwendung selbst nicht beeinflussen darf.

Eine andere Möglichkeit besteht darin, die Leseeinrichtung zum Auslesen des mobilen Datenträgers als eine sichere Einrichtung auszubilden. Hierfür können sichere Einrichtungen im Lesegerät integriert werden, die das Vorhandensein des Schlüssels bzw. des mobilen Datenträgers fehlersicher überprüfen können. Beispielsweise könnten an einem Lesegerät redundante, sich gegenseitig überprüfende Verarbeitungseinheiten hinzugefügt werden, die Tests ausführen, um das Vorhandensein des Schlüssels bzw. des mobilen Datenträgers fehlersicher zu verifizieren. Alternativ könnten solche Verarbeitungseinheiten auch auf andere Weise prüfen, ob die Aktualität und Gültigkeit der ausgelesenen Zugriffsberechtigungsdaten gewährleistet sind. Entsprechende Maßnahmen, aus einer Leseeinrichtung eine sichere Einrichtung zu machen, sind aus der Sicherheitstechnik bekannt und in entsprechenden Normen festgelegt. Die Ausgestaltung der Leseeinrichtung als vollwertige sichere Einrichtung im Sinne dieser Normen geht jedoch mit erheblichen Kosten einher, da eine spezielle Hardwareausstattung erforderlich ist und ein entsprechender Aufwand betrieben werden muss, um die Leseeinrichtung von unabhängiger Stelle zertifizieren zu lassen. Darüber hinaus ergeben sich weitere Anforderungen für die Integration der sicheren Einrichtung in die übrige Sicherheitstechnik, beispielsweise durch die Notwendigkeit einer zweikanaligen Datenübertragung.

Vor diesem Hintergrund ist es eine Aufgabe der vorliegenden Erfindung, eine verbesserte Steuerung des Zugriffs auf eine technische Anlage anzugeben, die die Vorteile der Verwendung mobiler und berührungsloswirkender Datenträger als Schlüssel aufweist, sich jedoch fehlersicher und kostengünstig realisieren lässt, so dass insgesamt auch den Anforderungen höherer Sicherheitskategorien der einschlägigen Norm Rechnung getragen wird.

Gemäß einem Aspekt der vorliegenden Erfindung wird diese Aufgabe gelöst durch ein Zugriffssteuerungssystem gemäß Anspruch 1.

Gemäß einem weiteren Aspekt der vorliegenden Erfindung wird die Aufgabe ferner gelöst durch eine Zugriffssteuerungseinrichtung gemäß Anspruch 11.

Gemäß einem weiteren Aspekt der vorliegenden Erfindung wird die Aufgabe ferner gelöst durch ein Zugriffssteuerungsverfahren gemäß Anspruch 12.

Es ist somit eine Idee der vorliegenden Erfindung, die von einem mobilen Datenträger ausgelesenen Zugriffsberechtigungsdaten mit einem dynamischen Anteil "anzureichern". Ein dynamischer Anteil bezeichnet hier, dass ein Teil der Zugriffsberechtigungsdaten sich mit der Zeit kontinuierlich verändert. Beispielsweise kann der dynamische Anteil der gegenwärtige Wert eines kontinuierlich in- oder dekrementierenden Zählers sein. Der dynamische Anteil wird mit den Zugriffsberechtigungsdaten an die Zugriffssteuerungseinrichtung übertragen, welche die Zugriffsberechtigungsdaten auswertet und einem Nutzer diejenigen Betriebsfunktionen freischaltet, die dieser gemäß den Zugriffsberechtigungsdaten ausführen darf. Das Freischalten erfolgt vorbehaltlich, dass die dynamisierten Zugriffsberechtigungsdaten einer bestimmten Erwartungshaltung entsprechen.

Die Zugriffssteuerungseinrichtung kann folglich den dynamischen Anteil mit einer Erwartungshaltung vergleichen und so die Aktualität der Zugriffsberechtigungsdaten prüfen. Die Zugriffssteuerungseinrichtung erzeugt eine Freigabe für den Zugriff auf die Betriebsfunktion nur dann, wenn der dynamische Anteil der definierten Erwartungshaltung entspricht. Wenn die Erwartungshaltung nicht erfüllt wird, werden die Daten verworfen. Dadurch kann eine Fehlerreaktionszeit abgebildet, überwacht und eingehalten werden.

Die Zugriffssteuerungseinrichtung erzeugt eine Freigabe, in der Regel in der Form eines Freigabesignal, somit in Abhängigkeit der dynamisierten Zugriffsberechtigungsdaten, d.h. auf Basis der validierten Zugriffsberechtigungsdaten und der sich kontinuierlich ändernden Informationen, die mit den Zugriffsberechtigungsdaten übertragen werden. Das "Anreichern" der Zugriffsberechtigungsdaten mit diesen Informationen, um die dynamisierten Zugriffsberechtigungsdaten zu erhalten, kann durch die Empfangseinrichtung ohne zusätzlichen Hardwareaufwand erfolgen. Die Empfangseinrichtung kann vielmehr eine einfache und nicht-fehlersichere Einrichtung sein, wobei zur Erreichung eines entsprechenden Vertrauenslevel (Safety-Level) ein probabilistischer Ansatz über die Ausgestaltungen des dynamischen Anteils verfolgt wird.

"Nicht-fehlersicher" bedeutet in diesem Zusammenhang, dass die Empfangseinrichtung für sich genommen nicht den Anforderungen der einschlägigen Sicherheitsnormen im Hinblick auf die Eigenfehlersicherheit genügt, d.h. die Empfangseinrichtung keine ergänzenden sicheren Einrichtungen im Sinne der Sicherheitstechnik aufweist. Dies hat den Vorteil, dass günstige Empfangseinrichtungen verwendet werden können bzw. die Möglichkeit besteht, vorhandene nicht-fehlersichere Leseeinrichtungen einer technischen Anlage wiederzuverwenden. Eine einfache Modifikation der Auslesesoftware kann hierbei ausreichen, um die Zugriffsberechtigungsdaten im Sinne der vorliegenden Erfindung zu dynamisieren.

Ein weiterer Vorteil besteht darin, dass die Sicherheitstechnik und Steuertechnik klar voneinander getrennt werden können. Dies ermöglicht, dass ein Anlagenbauer oder Maschinenhersteller die Zugriffssteuerung durch einen Nutzer im Wesentlichen unabhängig von der für die Maschine notwendigen Sicherheitstechnik realisieren kann. Der Anlagenbauer oder Maschinenhersteller kann damit die Sicherheitstechnik unabhängig und flexibel hinzukaufen und nachrüsten, wodurch sich sein Gestaltungsspielraum vorteilhaft erhöht.

Ferner, indem der dynamische Anteil bereist am Anfang des Zugriffssteuerungsprozess ergänzt wird, kann die gesamte Prozesskette basierend hierauf überprüft werden. Die vorgeschlagene Zugriffssteuerung kann somit die gesamte Prozesskette effizient abdecken.

Insgesamt offenbart das erfindungsgemäße Zugriffssteuerungssystem eine kostengünstige und flexible Steuerung des Zugriffs eines Nutzers auf eine oder mehrere Betriebsfunktionen einer technischen Anlage. Die eingangs genannte Aufgabe ist somit vollständig gelöst.

In einer weiteren Ausgestaltung kann die Empfangseinrichtung dazu eingerichtet sein, bei jedem Auslesen der Zugriffsberechtigungsdaten von dem mobilen Datenträger ein definiertes Muster als dynamischen Anteil den Zugriffsberechtigungsdaten zu ergänzen.

Der dynamische Anteil kann somit an das Auslesen der Zugriffsberechtigungsdaten gekoppelt sein, so dass bei jedem Auslesen ein anderer Datensatz entsteht, selbst wenn sich die Zugriffsberechtigungsdaten nicht verändert haben. Auf diese Weise kann die Dynamisierung besonders effizient implementiert werden. Indem das Muster am Anfang der Verarbeitungskette der Zugriffsteuerung generiert wird, kann die vollständige Verarbeitungskette durch das Muster und dessen Auswertung getestet werden.

Insbesondere kann das Muster eine Berechtigung, eine Seriennummer, einen Zähler, einen aktuellen Sitzungsschlüssel, einen oder mehrere vorherige Sitzungsschlüssel, eine Schlüssel-ID, einen absoluten Zeitwert und/oder einen relativen Zeitwert umfassen, insbesondere eine definierte Kombination einer oder mehrerer der vorgenannten Elemente sein.

Das Muster kann somit auf unterschiedliche Weisen gebildet sein, wobei mindestens ein sich kontinuierlich ändernder Datenwert in dem Muster enthalten ist. Bspw. kann der dynamische Anteil einen Wert umfassen, welcher dem Zeitpunkt entspricht, an dem die Zugriffsberechtigungsdaten durch die Empfangseinrichtung ausgelesen worden sind. Ein solcher Zeitstempel kann die tatsächliche Uhrzeit sein oder ein Zählerwert relativ zu einem definierten Startzeitpunkt. Ein Zeitstempel als dynamischer Anteil hat den Vorteil, dass sich dieser besonders einfach und effizient realisieren lässt, wodurch die Implementierung der Dynamisierung weiter vereinfacht wird und auch bei einfachen Lesegeräten nachgerüstet werden kann. Neben einem Zeitstempel können aber auch andere sich kontinuierlich ändernde Werte verwendet werden, die grundsätzlich an der Empfangseinrichtung zur Verfügung stehen. Über eine Kombination verschiedener Werte zu einem komplexen Muster kann ein gewünschter Vertrauenslevel über eine probabilistische Aussage realisiert werden.

In einer weiteren Ausgestaltung kann die Empfangseinrichtung dazu eingerichtet sein, den dynamischen Anteil nur dann zu erzeugen, wenn die Zugriffsberechtigungsdaten vollständig und/oder als gültig ausgelesen worden sind.

Mit anderen Worten der dynamische Anteil wird den Zugriffsberechtigungsdaten angehängt und ist an deren Vorhandensein geknüpft. Können keine Zugriffsberechtigungsdaten ausgelesen werden, wird auch der dynamische Anteil nicht ergänzt, woraufhin die Zugriffssteuerung keine Freigabe erzeugt, auch wenn die noch vorliegenden Zugriffsberechtigungsdaten valide sind.

In einer weiteren Ausgestaltung kann die Empfangseinrichtung die dynamischen Zugriffsberechtigungsdaten einkanalig an die Zugriffssteuerungseinrichtung senden. Indem für die Zugriffssteuerung auf einen probabilistischen Ansatz basierend auf dem dynamischen Anteil zurückgegriffen wird, muss der Übertragungsweg nicht zusätzlich gesichert werden und kann folglich einkanalig ausgestaltet sein. Dies hat den Vorteil, dass eine einfache Verkabelung zwischen der Empfangseinrichtung und der Zugriffssteuerungseinrichtung ausreicht, wodurch weitere Kosten eingespart werden können. Ebenso kann auf die Verwendung von Sicherheitsprotokollen (PROFIsafe, FSoE, CIP Safety, etc. ) verzichtet werden, was eine rechenaufwendige Kodierung/Dekodierung überflüssig macht.

In einer weiteren Ausgestaltung kann die Empfangseinrichtung eine Leseeinrichtung aufweisen, um den mobilen Datenträger über eine Funkschnittstelle auszulesen.

Der mobile Datenträger ist somit ein berührungsloswirkender Datenträger. Ferner beruht die Kommunikation zwischen der Empfangseinrichtung und dem mobilen Datenträger vorzugsweise auf RFID-Technologie. Auf Seiten des mobilen Datenträgers kann dann ein passiver Transponder verwendet werden, der ohne eigene Energieversorgung drahtlos ausgelesen werden kann.

In einer weiteren Ausgestaltung umfasst das Zugriffssteuerungssystem ferner eine Auswahleinrichtung zur Auswahl einer oder mehrerer Betriebsfunktionen durch den Nutzer, wobei die Zugriffssteuerungseinrichtung ferner eingerichtet ist, die Auswahleinrichtung so zu konfigurieren, dass diese dem Nutzer nur Zugriff auf die freigegebenen Betriebsfunktionen gewährt.

Die Zugriffssteuerungseinrichtung kann somit direkt auf eine Auswahleinrichtung, bspw. ein Bedienpanel, einwirken und den Zugriff auf nur die freigegebenen Funktionen beschränken.

In einer weiteren Ausgestaltung kann die Zugriffssteuerungseinrichtung dazu eingerichtet sein, die Auswahleinrichtung zu sperren, wenn sich der dynamische Anteil für einen definierten Zeitraum nicht ändert.

Die Ansteuerung der Auswahleinrichtung kann somit ebenfalls unmittelbar von dem dynamischen Anteil und dessen Auswertung abhängen. Vorzugsweise verfügt die Zugriffssteuerungseinrichtung zudem über sichere Einrichtungen, die gewährleisten können, dass eine Auswahleinrichtung fehlersicher angesteuert wird. Dies hat den Vorteil, dass eine Sicherheitsfunktion basierend auf der Zugriffssteuerung unmittelbar von der Zugriffssteuerungseinrichtung umgesetzt werden kann.

In einer weiteren Ausgestaltung kann das Zugriffssteuerungssystem ferner eine fehlersichere Steuereinheit aufweisen, die eingerichtet ist, einen fehlersicheren Betrieb der technischen Anlage zu gewährleisten und eine Sicherheitsfunktion auszuführen, wobei die Zugriffssteuerungseinrichtung dazu eingerichtet ist, die Freigabe an die fehlersichere Steuereinheit zu übertragen, so dass die fehlersichere Steuereinheit die technische Anlage in Abhängigkeit der Freigabe steuert, insbesondere die technische Anlage in einen sicheren Zustand überführt, wenn keine Freigabe gesendet wird.

Die eigentliche Steuerung der technischen Anlage kann somit, wie gewohnt, von einer sicheren Steuerung ausgeführt werden, die unter Berücksichtigung der Freigabe den Zugriff auf die Maschine oder Betriebsfunktionen der Maschine sperrt. Als ultima-ratio kann die fehlersichere Steuereinheit auch die Maschine in einen sicheren Zustand überführen, wenn keine Berechtigung mehr vorliegen sollte.

In einer weiteren Ausgestaltung kann die Zugriffssteuerungseinrichtung ein integraler Bestandteil, eine Baugruppe und/oder ein Modul, insbesondere ein Softwaremodul, der fehlersicheren Steuereinheit sein.

Die Zugriffssteuerungseinrichtung kann somit eine eigenständige Einheit sein oder in eine fehlersicher Steuereinheit integriert sein. Letzteres hat den Vorteil einer kostengünstigen Implementierung, da für die Zugriffssteuerungseinrichtung auf sichere Einrichtungen in der fehlersicheren Steuereinheit zurückgegriffen werden kann. Zudem kann auf diese Weise eine sichere Kommunikation zwischen Zugriffssteuerungseinrichtung und fehlersicherer Steuereinheit gewährleistet werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine vereinfachte schematische Darstellung eines Ausführungsbeispiels eines Zugriffssteuerungssystems,
- Fig. 2a: ein Bespiel für dynamisierte Zugriffsberechtigungsdaten mit einem inkrementellen Zähler,
- Fig. 2b: ein Bespiel für dynamisierte Zugriffsberechtigungsdaten mit einem Zeitstempel,
- Fig. 3: eine vereinfachte schematische Darstellung eines Ausführungsbeispiels einer Zugriffssteuerungseinrichtung, und
- Fig. 4: ein Flussdiagramm eines Ausführungsbeispiel eines Zugriffssteuerungsverfahrens zur Steuerung des Zugriffs eines Nutzers auf eine oder mehrere Betriebsfunktionen einer technischen Anlage.

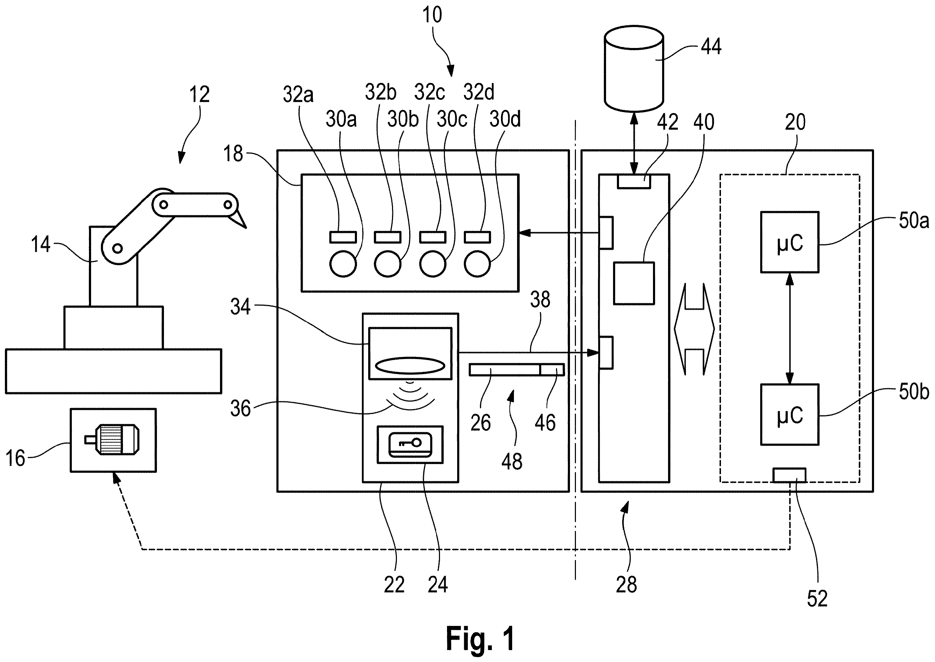

Fig. 1 zeigt in einer vereinfachten schematischen Darstellung ein Ausführungsbeispiels eines Zugriffssteuerungssystems 10 zur Steuerung eines Zugriffs eines Nutzers auf eine oder mehrere Betriebsfunktionen einer technischen Anlage 12.

Als technische Anlage 12 ist in diesem Ausführungsbeispiel exemplarisch ein Roboter 14 mit seinen Antrieben 16 angedeutet. Es versteht sich jedoch, dass das Zugriffssteuerungssystem 10 nicht auf eine derartige Ausführung beschränkt ist, sondern jede andere technische Anlage mit dem Zugriffssteuerungssystem 10 koppelbar ist.

Das Zugriffssteuerungssystem 10 umfasst in diesem bevorzugten Ausführungsbeispiel eine Auswahleinrichtung 18 zur Auswahl einer oder mehrerer Betriebsfunktionen durch einen Nutzer, eine fehlersichere Steuereinheit 20 (FS-Steuerung), die einen fehlersichern Betrieb der technischen Anlage gewährleisten kann, eine Empfangseinrichtung 22, die dazu eingerichtet ist, von einem mobilen Datenträger 24 Zugriffsberechtigungsdaten 26 auszulesen, sowie eine Zugriffssteuerungseinrichtung 28.

Die Zugriffssteuerungseinrichtung 28 empfängt die Zugriffsberechtigungsdaten 26 von der Empfangseinrichtung 22 und validiert diese, d.h., die Zugriffssteuerungseinrichtung 28 ermittelt anhand der Zugriffsberechtigungsdaten 26 für welche Betriebsfunktionen der Inhaber des mobilen Datenträgers eine Berechtigung hat. Diese Berechtigung kann direkt aus den Zugriffsberechtigungsdaten 26 hervorgehen oder anhand der Zugriffsberechtigungsdaten 26 von Zugriffssteuerungseinrichtung 28 ermittelt werden.

Die Auswahleinrichtung 18 kann bspw. ein Bedienpult sein, das an der technischen Anlage 12 angeordnet ist. Das Bedienpult kann Taster 30a - 30d sowie zugehörige Anzeigeelemente 32a - 32d umfassen. Mit Hilfe der Taster 30a - 30d kann ein Nutzer der technischen Anlage eine oder mehrere Betriebsfunktionen auswählen. Vorzugsweise ist jedem Taster genau eine Betriebsfunktion der technischen Anlage 12 zugeordnet. Die Anzeigeelemente 32a - 32d können die gewählte Betriebsfunktion nach der Auswahl anzeigen.

Die Empfangseinrichtung 22 ist eingerichtet, Daten von einem mobilen Datenträger 24 als Zugriffsberechtigungsdaten 26 auszulesen. Vorzugsweise erfolgt das Auslesen der Daten über eine Leseeinrichtung 34, die eine Funkschnittstelle 36 aufweist. Die Kommunikation zwischen der Leseeinrichtung 34 und dem mobilen Datenträger 24 kann bspw. über RFID-Technologie erfolgen. Der mobile Datenträger 24 kann in diesem Fall ein passiver Transponder sein, beispielsweise ein einfacher Token, der ohne eigene Energieversorgung auskommt und allein durch die Anregung der Leseeinrichtung 34 kommuniziert. Die Leseeinrichtung 34 kann ein handelsübliches RFID-Lesegerät sein und u.a. eine Logik zur Autorisierung umfassen.

Die Zugriffsberechtigungsdaten 26 werden von der Empfangseinrichtung 22 an die Zugriffssteuerungseinrichtung 28 übertragen. Die Übertragung kann kabelgebunden erfolgen, insbesondere über eine einfache, einkanalige Datenübertragungsstrecke 38. Die Datenübertragung kann ohne Redundanz oder spezielle Protokolle erfolgen. Vielmehr kann eine Absicherung der Übertragung durch eine geeignete Signalverarbeitung basierend auf den dynamisierten Zugriffsberechtigungsdaten erfolgen.

Eine Codierung der Berechtigungen kann beliebig gewählt werden. Vorzugsweise ist eine Binärdarstellung der Berechtigung so gewählt, dass eine Hamming-Distanz zwischen den einzelnen Darstellungen möglichst groß ist, um eine hohe Robustheit bei der Übertragung und Speicherung der Berechtigung zu gewährleisten. Bspw. kann die Berechtigung in einem 32-Bit-Wert hinterlegt sein und eine Hamming-Distanz von 9 vorgegeben werden. Dann kann durch das Verändern von bis zu 8 Bits keine andere gültige Berechtigung entstehen.

Anhand der Zugriffsberechtigungsdaten 26 kann die Zugriffssteuerungseinrichtung 28 in einem bevorzugten Ausführungsbeispiel die Auswahleinrichtung 18 ansteuern, so dass nur diejenigen Betriebsfunktionen von einem Nutzer ausgewählt werden können, für die er eine Berechtigung gemäß der Zugriffsberechtigungsdaten 26 hat. Beispielsweise kann die Zugriffssteuerungseinrichtung 28 einzelne Taster des Bedienpults aktivieren oder deaktivieren, so dass die jeweiligen Taster nur dann reagieren, wenn der Nutzer für die jeweilige Betriebsfunktion, die dem Taster zugeordnet ist, die entsprechende Berechtigung gemäß der Zugriffsberechtigungsdaten 26 besitzt.

Die Anzeigeelemente 32a - 32d können in einer bevorzugten Ausführungsform neben der gewählten Betriebsfunktion insbesondere auch die Betriebsfunktionen andeuten, die bei gegebener Berechtigung von dem Benutzer ausgewählt werden können. Bspw. können die Anzeigeelemente 32a - 32d nur derjenigen Taster 30a - 30d aufleuchten, deren zugehörige Betriebsfunktion gemäß der Zugriffsberechtigungsdaten 26 erlaubt ist.

Die Zugriffssteuerungseinrichtung 28 kann weiterhin eine Feststelleinrichtung umfassen. Die Feststelleinrichtung 40 stellt aufgrund der Zugriffsberechtigungsdaten 26, die die Empfangseinrichtung 22 empfangen hat, fest, welche Betriebsfunktionen von einem Nutzer ausgeführt werden dürfen. Auf Basis dieser Feststellung steuert die Zugriffssteuerungseinrichtung 28 in oben beschriebener Weise den Zugriff auf die technische Anlage, indem sie dem Nutzer den Zugriff nur für diejenigen ausgewählten Betriebsfunktionen gewährt, zu deren Ausführung der Nutzer berechtigt ist.

Zur Feststellung der Berechtigung kann die Feststelleinrichtung 40 über eine Kommunikationsschnittstelle 42 auf einen Server zugreifen, beispielsweise über ein lokales Datennetzwerk 44. Der Server kann basierend auf einer Nutzeridentifikation die Berechtigungen des identifizierten Nutzers der Zugriffssteuerungseinrichtung 28 bereitstellen. Alternativ oder ergänzend können die Berechtigungen auch auf der Zugriffssteuerungseinrichtung 28 selbst hinterlegt sein.

Erfindungsgemäß ist die Empfangseinrichtung 22 ferner dazu eingerichtet, die Zugriffsberechtigungsdaten 26 um einen dynamischen Anteil 46 zu ergänzen und die dynamisierten Zugriffsberechtigungsdaten 48 an die Zugriffssteuerungseinrichtung 28 zu senden.

Insbesondere kann die Empfangseinrichtung 22 Zugriffsberechtigungsdaten 26 in Abhängigkeit des Auslesevorgangs dynamisieren, d.h., unmittelbar an einem Anfang der Prozesskette der Zugriffssteuerung. Bspw. reichert die Empfangseinrichtung 22 bei jedem Auslesevorgang die Zugriffsberechtigungsdaten 26 um den dynamischen Anteil 46 an. Denkbar ist auch, dass die Dynamisierung an das Vorhandensein des mobilen Datenträgers in einem Wirkbereich der Empfangseinrichtung 22 gekoppelt ist. Mit anderen Worten, die Empfangseinrichtung 22 kann eingerichtet sein, nur dann die Zugriffsberechtigungsdaten 26 zu dynamisieren, wenn der mobile Datenträger 24 "gesteckt" ist und berührungslos wirken kann, d.h., die Zugriffsberechtigungsdaten 26 von der Empfangseinrichtung 22 erfassbar sind.

Der dynamische Anteil 46 kann ein Teil der Zugriffsberechtigungsdaten 26 sein, der sich über die Zeit verändert. Die dynamisierten Zugriffsberechtigungsdaten 48 für eine bestimmte Berechtigung zu einem ersten Zeitpunkt unterscheiden sich somit von den dynamisierten Zugriffsberechtigungsdaten 48 für dieselbe Berechtigung zu einem anderen Zeitpunkt. Bei kontinuierlichem Auslesen der Zugriffsberechtigungsdaten 26 von dem mobilen Datenträger 24 kann die Empfangseinrichtung 22 bspw. an die ausgelesenen Zugriffsberechtigungsdaten 26 einen Zeitstempel anhängen oder diese mit einem Zeitstempel verknüpfen, um die dynamisierten Zugriffsberechtigungsdaten 48 zu erzeugen.

Der dynamische Anteil kann insbesondere ein definiertes Muster sein, das mit den von dem mobilen Datenträger eingelesenen Zugriffsberechtigungsdaten 26 verknüpft wird. Das Muster kann bspw. eine Berechtigung, eine Seriennummer, einen Zähler, einen aktuellen Sitzungsschlüssel, einen oder mehrere vorherige Sitzungsschlüssel, einen absoluten Zeitwert und/oder einen relativen Zeitwert umfassen. Die Sitzungsschlüssel können im Falle von NFC bspw. ein aktueller NFC Session Key und/oder ein oder mehrere NFC Session Keys eines vorherigen Zyklus sein. Insbesondere kann das Muster eine definierte Verknüpfung mehrerer der vorgenannten Elemente sein. Je komplexer das Muster ist, desto höher kann ein erreichbarer Vertrauenslevel basierend auf einer probabilistischen Aussage sein.

Die dynamisierten Zugriffsberechtigungsdaten 48 werden an die Zugriffssteuerungseinrichtung 28 übermittelt und die enthaltenen Zugriffsberechtigungsdaten 26 in der zuvor beschriebenen Weise zur Zugriffsteuerung verwendet. Der dynamische Anteil 46 wird zur Überprüfung der Aktualität der Zugriffsberechtigungsdaten 48 verwendet und kann zur Realisierung einer Sicherheitsfunktion herangezogen werden. Insbesondere kann durch den dynamischen Anteil sichergestellt werden, dass nur dann, wenn aktuelle Zugriffsberechtigungsdaten vorliegen, ein Zugriff auf die technische Anlage bzw. bestimmte Betriebsfunktionen der technischen Anlage freigegeben wird.

Die Auswertung des dynamischen Anteils erfolgt durch den Vergleich mit einer Erwartungshaltung. Mit anderen Worten ein definiertes Muster muss einem erwarteten Muster entsprechen. Bspw. muss innerhalb des Musters ein Zähler ausgehend von einem vorherigen Wert in einem gewissen Bereich liegen. Ferner können basierend auf einem Ausleseintervall und einer eigenen FS-Zykluszeit bestimmte Erwartungswerte festgelegt sein, die eine Erwartungshaltung an den dynamischen Anteil definieren. Das Vergleichen kann zu niedrige, zu hohe und/oder über die Zeit äquidistante Werte erkennen. Ferner kann überprüft werden, ob sich Sitzungsschlüssel über eine gewisse Zeit hinweg ändern. Es versteht sich, dass der dynamische Anteil nicht auf die vorstehenden Beispiel beschränkt ist, sondern weitere sich kontinuierlich ändernde Informationen umfassen kann.

Je nachdem, wie der dynamische Anteil, insbesondere ein definiertes Muster, ausgebildet ist, können verschiede Verifikationsmöglichkeiten kombiniert werden, so dass eine Fehlerwahrscheinlichkeit auf ein definiertes Maß reduziert werden kann. Insbesondere kann eine Fehlerwahrscheinlichkeit auf ein Maß reduziert werden, die eine Zertifizierung des Systems gemäß einer hohen Sicherheitskategorie ermöglicht, ohne dass die Empfangseinrichtung selbst als fehlersichere Einheit ausgebildet sein muss.

Bleibt der dynamische Anteil für einen definierten Zeitraum unverändert oder entspricht der dynamische Anteil nicht der definierten Erwartungshaltung, kann der Zugriff auf die technische Anlage bzw. einzelne Betriebsfunktionen der technischen Anlage gesperrt werden und ggf. eine Sicherheitsfunktion ausgeführt werden, um die Maschine in einen sicheren Zustand zu überführen. Letzteres ist jedoch nur eine ultima-ratio. Vorteilhafterweise läuft die technische Anlage weiter und nur bestimmte Betriebsfunktionen werden gesperrt oder eingeschränkt, um die Verfügbarkeit der technischen Anlage durch die Zugriffssteuerung nicht unnötig einzuschränken.

Die Zugriffssteuerungseinrichtung 28 kann in einem Ausführungsbeispiel die aus den dynamisierten Zugriffsberechtigungsdaten 48 ermittelte Freigabe auch an eine fehlersichere Steuereinheit 20 weiterleiten, welche die tatsächliche Sperrung bzw. Freigabe von Betriebsfunktionen durchführt und ggf. eine Sicherheitsfunktion ausführen kann, die ein von der Maschine ausgehendes Risiko auf ein akzeptables Maß reduziert. Ebenso ist es denkbar, dass die fehlersichere Steuereinheit 20 einen Musterverifikationsprozess ganz oder zumindest teilweise anstelle der Zugriffssteuerungseinrichtung 28 durchführt.

Die fehlersichere Steuereinheit 20 kann dann die technische Anlage 12 in an sich bekannter Weise steuern und durch das Vorhandensein von redundanten Verarbeitungseinheiten 50a, 50b und sicheren Ausgängen 52 gekennzeichnet sein. Die redundanten Verarbeitungseinheiten 50a, 50b können sich gegenseitig überwachen und unabhängig voneinander auf die sicheren Ausgänge 52 einwirken.

In einem Ausführungsbeispiel kann die Zugriffssteuerungseinrichtung 28 eine in die fehlersichere Steuereinheit 20 integrierte Einheit sein. Vorteilhaft kann die Zugriffssteuerungseinrichtung 28 jedoch auch als getrennte Einheiten oder als Modul für eine fehlersichere Steuereinheit 20 realisiert sein, wodurch sich eine Zugriffsteuerung unabhängig von der Sicherheitssteuerung implementieren lässt. Beispielsweise kann eine technische Anlage, die von einer fehlersicheren Steuereinheit 20 überwacht wird, auf einfache Weise um ein Zugriffssteuerung ergänzt werden, ohne dass die Hardware auf Seiten der technische Anlage geändert oder ausgetauscht werden muss oder die fehlersichere Steuereinheit 20 anzupassen ist. Ein Zugriffssteuerungssystem gemäß der vorliegenden Offenbarung lässt sich somit besonders einfach auch bei bestehenden Systemen nachrüsten und ergänzen.

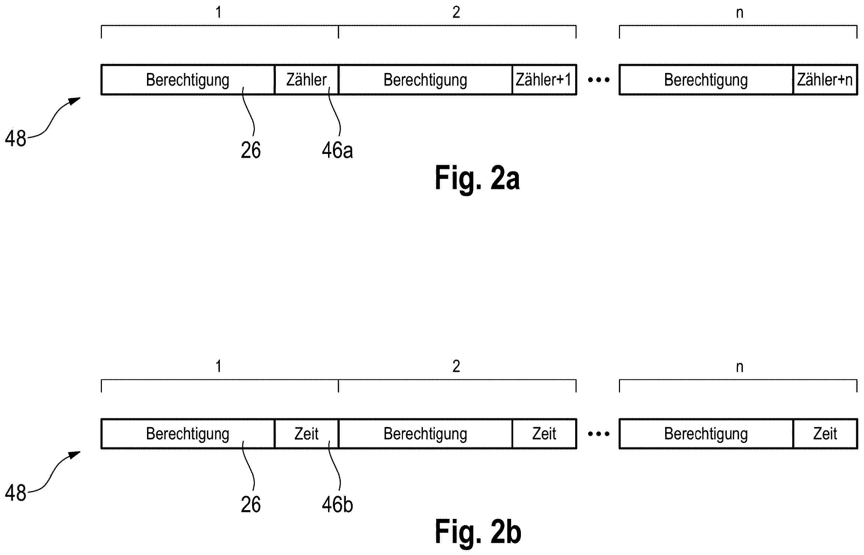

Fig. 2a und 2b zeigen exemplarisch zwei Möglichkeiten, wie ein dynamischer Anteil 46 eingerichtet sein kann. Es versteht sich, dass weitere Varianten, wie zuvor beschrieben, denkbar sind, um die übertragenen Informationen zu dynamisieren.

Fig. 2a zeigt einen Datenstrom, bei dem der dynamische Anteil ein inkrementeller Zähler 46a umfasst. Bei jedem Auslesen der Zugriffsberechtigungsdaten 26 wird ein Zähler um eine Stelle erhöht und der aktuelle Wert des Zählers den Zugriffsberechtigungsdaten 26 angehängt. Ein Paket, welches die Zugriffsberechtigungsdaten 26 überträgt, kann somit um ein zusätzliches Zählerfeld erweitert werden, in dem der aktuelle Wert des Zählers hinterlegt ist. Auf diese Weise unterscheidet sich jedes Datenpaket von dem vorherigen, selbst dann, wenn die Zugriffsberechtigungsdaten 26 in dem Zyklus unverändert geblieben sind.

In der Fig. 2b wird anstelle eines Zählers ein Zeitstempel 46b als dynamischer Anteil den Zugriffsberechtigungsdaten 26 hinzugefügt. Der Zeitstempel 46b kann insbesondere einen Zeitpunkt markieren, an dem die zugehörigen Zugriffsberechtigungsdaten 26 von dem mobilen Datenträger 24 vollständig ausgelesen worden sind. Auch auf diese Weise kann eine Dynamisierung der Zugriffsberechtigungsdaten 26 erfolgen.

Das Anhängen eines dynamischen Anteils 46 stellt nur eine Möglichkeit dar, die zu übertragenen Informationen zu dynamisieren. Alternativ können die Zugriffsberechtigungsdaten 26 auch anderweitig mit dem dynamischen Anteil verknüpft werden, beispielsweise über eine entsprechende Kodierung, welche die Zugriffsberechtigungsdaten 16 mit einem dynamischen Element verknüpft. So können in einem Ausführungsbeispiel eine Schlüssel-ID mit einem Zähler verrechnet werden.

Ebenso ist eine zyklische Verschlüsselung denkbar, die in jedem Zyklus aus gleichen Daten unterschiedliche verschlüsselte Daten erzeugt. Das einfache Anhängen der dynamischen Information hat demgegenüber jedoch den Vorteil, dass die Signalverarbeitung beim Generieren und Trennen der dynamisierten Zugriffsberechtigungsdaten besonders einfach ausgebildet sein kann.

Die Verwendung von Zählern und Zeitstempeln als Werte für den dynamischen Anteil, wie in Fig. 2a und 2b gezeigt, ist nur exemplarisch zu verstehen. Vorzugsweise werden eine Vielzahl von dynamischen und nicht dynamischen Daten verknüpft und kombiniert, um ein komplexes Muster zu erzeugen, welches von möglichst vielen Parametern abhängt, die ungleich sind oder auf einem unterschiedlichen dynamischen Verhalten beruhen, wie bspw. unterschiedliche Änderungszyklen. Je komplexer das Muster ist, desto höher kann ein erreichbarer Vertrauenslevel sein.

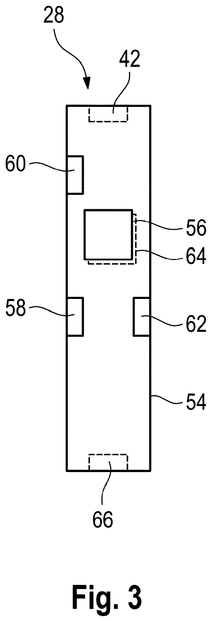

Fig. 3 zeigt in einer vereinfachten schematischen Darstellung ein Ausführungsbeispiel einer Zugriffssteuerungseinrichtung 28. Die Zugriffssteuerungseinrichtung 28 ist hier als eigenständiges Modul ausgebildet und in einem eigenen Gehäuse 54 angeordnet. In dieser Ausgestaltung ist die Zugriffssteuerungseinrichtung 28 besonders einfach auch bei bestehenden Systemen nachrüstbar.

Die Zugriffssteuerungseinrichtung 28 weist in diesem Ausführungsbeispiel eine Verarbeitungseinheit 56 und mehrere Schnittstellen 42, 58, 60, 62 auf.

Die Verarbeitungseinheit 56 kann über die erste Schnittstelle 58 Zugriffsberechtigungsdaten empfangen, die von der Verarbeitungseinheit 56 validiert werden. Über die zweite Schnittstelle 60 kann die Zugriffssteuerungseinrichtung 28 eine an diese angeschlossene Auswahleinrichtung basierend auf den validierten Zugriffsberechtigungsdaten konfigurieren. Das Konfigurieren kann das Ansteuern der Auswahleinrichtung beinhalten, sodass diese einem Nutzer nur Zugriff für diejenigen Betriebsfunktionen einer technischen Anlage gewährt, für die die Zugriffsberechtigungsdaten valide sind.

Die Verarbeitungseinheit 56 kann eine Feststelleinrichtung aufweisen, die aus den Zugriffsberechtigungsdaten 26 entsprechende Berechtigungen extrahiert, wenn diese in den Zugriffsberechtigungsdaten codiert sind. Alternativ oder ergänzend können die Zugriffsberechtigungsdaten auch referenzierende Angaben beinhalten, wie beispielsweise eine Benutzerkennung, anhand derer die Feststelleinrichtung 40 die zugehörige Berechtigung ermitteln kann. Die Zugriffssteuerungseinrichtung 28 kann hierfür eine weitere Schnittstelle 42 aufweisen, über die die Feststelleinrichtung mit einem Datenspeicher gekoppelt ist. Die Feststelleinrichtung kann in die Verarbeitungseinheit 56 integriert sein, oder als Softwaremodul von dieser ausgeführt werden.

Die Zugriffsberechtigungsdaten, welche die Zugriffssteuerungseinrichtung 28 über die erste Schnittstelle 58 empfängt, sind, wie zuvor beschrieben, ferner um einen dynamischen Anteil 46 angereichert, der von der Verarbeitungseinheit 56 extrahiert, ausgewertet und mit einer definierten Erwartungshaltung korreliert werden kann. Anhand des dynamischen Anteils 46 der Zugriffsberechtigungsdaten 26 kann die Zugriffssteuerungseinrichtung 28 somit eine Wahrscheinlichkeitsaussage treffen, ob die Zugriffsberechtigungsdaten 26 ordnungsgemäß von der Empfangseinrichtung ausgelesen worden sind und gegenwärtig auch noch aktuell sind, ohne dass die Empfangseinrichtung selbst über eine sichere Einrichtung verfügen muss.

Die Zugriffssteuerungseinrichtung 28 kann hingegen vorteilhaft als sichere Einrichtungen ausgebildet sein und hierfür eine weitere Verarbeitungseinheit 64 parallel zur Verarbeitungseinheit 56 aufweisen. Die parallelen Verarbeitungseinheiten 56, 64 können so eingerichtet sein, dass diese sich gegenseitig überwachen, um einen fehlersicheren Betrieb der Zugriffssteuerungseinrichtung 28 zu gewährleisten.

Über zusätzliche sichere Ausgänge 66 kann die Zugriffsberechtigungseinrichtung 28 in einem weiteren Ausführungsbeispiel auch so eingerichtet sein, dass diese selbst eine fehlersichere Steuerung der technischen Anlage wahrnimmt. Dies hätte den Vorteil, dass die Zugriffssteuerung unabhängig von einer bestehenden Sicherheitstechnik implementiert werden kann. Vorteilhafterweise ist die Zugriffsberechtigungseinrichtung 28 jedoch so eingerichtet, mit einer bereits vorhandenen fehlersicheren Steuereinheit 20 zusammenzuwirken und ggf. die Auswertung der dynamisierten Daten ganz oder teilweise an diese fehlersichere Steuereinheit 20 zu delegieren. Dies hätte den Vorteil, dass die Zugriffsberechtigungseinrichtung 28 auf ein Minimum an benötigen Komponenten reduziert werden kann, so dass diese besonders einfach und kostengünstig realisiert werden kann.

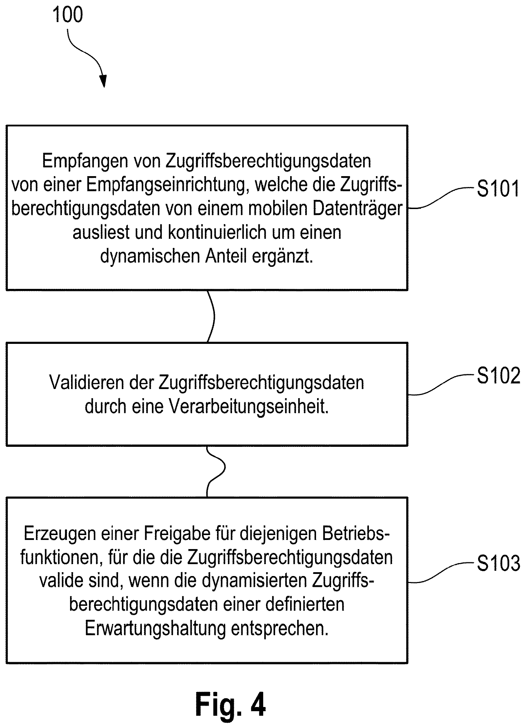

Fig. 4 veranschaulicht abschließend exemplarisch in einem Flussdiagramm ein Ausführungsbeispiel eines Zugriffssteuerungsverfahren zur Steuerung eines Zugriffs eines Nutzers auf eine oder mehrere Betriebsfunktionen einer technischen Anlage.

Ein erster Schritt S101 umfasst das Empfangen von Zugriffsberechtigungsdaten von einer Empfangseinrichtung, welche die Zugriffsberechtigungsdaten von einem mobilen Datenträger ausliest und diese kontinuierlich um einen dynamischen Anteil ergänzt.

Ein zweiter Schritt S102 umfasst das Validieren der Zugriffsberechtigungsdaten durch eine Verarbeitungseinheit. Die Verarbeitungseinheit entnimmt den Zugriffsberechtigungsdaten Informationen darüber, welche Betriebsfunktion freizuschalten sind. Die Information kann in einem Ausführungsbeispiel direkt aus den Zugriffsberechtigungsdaten hervorgehen oder über eine externe Einheit ermittelt werden.

Ein dritter Schritt S103 umfasst das Erzeugen einer Freigabe für diejenigen Betriebsfunktionen, für die die Zugriffsberechtigungsdaten valide sind, wenn die dynamisierten Zugriffsberechtigungsdaten einer definierten Erwartungshaltung entsprechen. Die Freigabe ist daher daran geknüpft, ob die mit den Zugriffsberechtigungsdaten übermittelten dynamischen Anteile einer definierten Erwartungshaltung entsprechen. Die dynamischen Anteile sind dabei, wie zuvor beschrieben, so ausgewählt, dass eine Wahrscheinlichkeitsaussage getroffen werden kann, ob die Zugriffsberechtigungsdaten ordnungsgemäß eingelesen und übertragen worden sind.

Durch ein komplexes Muster kann die Wahrscheinlichkeit, dass ein Einlesen und Übertragen der Zugriffsberechtigungsdaten ordnungsgemäß erfolgt ist, so festgelegt werden, dass insgesamt die Anforderungen an eine hohe Sicherheitskategorie erfüllt sind, selbst dann, wenn die Empfangseinrichtung keine sichere Einrichtung ist.

Es versteht sich, dass das Verfahren, wie hier exemplarisch dargestellt, weitere Schritte umfassen kann und nicht auf die hier gezeigte Reihenfolge beschränkt ist. Weitere Verfahrensschritte können sich aus den zuvor beschriebenen Ausgestaltungen des Zugriffssteuerungssystems ergeben.

Ferner wird der Schutzbereich der vorliegenden Erfindung durch die nachfolgenden Ansprüche bestimmt und der Schutzbereich ist nicht durch die in der Beschreibung erläuterten oder in den Figuren gezeigten Merkmale beschränkt.

## Patentansprüche

1. Zugriffssteuerungssystem (10) zur Steuerung eines Zugriffs eines Nutzers auf eine oder mehrere Betriebsfunktionen einer technischen Anlage (12), umfassend:
eine Empfangseinrichtung (22), die dazu eingerichtet ist, kontinuierlich Zugriffsberechtigungsdaten (26) von einem mobilen Datenträger (24) auszulesen, und
eine Zugriffssteuerungseinrichtung (28), die dazu eingerichtet ist, die Zugriffsberechtigungsdaten (26) zu validieren,
**dadurch gekennzeichnet, dass** die Empfangseinrichtung (22) ferner dazu eingerichtet ist, die Zugriffsberechtigungsdaten (26) kontinuierlich um einen dynamischen Anteil (46) zu ergänzen, um dynamisierte Zugriffsberechtigungsdaten (48) zu erhalten, und diese an die Zugriffssteuerungseinrichtung (28) zu senden, und dass
die Zugriffssteuerungseinrichtung (28) dazu eingerichtet ist, die dynamisierten Zugriffsberechtigungsdaten (48) mit den Zugriffsberechtigungsdaten (26) und dem dynamischen Anteil (46) von der Empfangseinrichtung (22) zu empfangen und eine Freigabe für diejenigen Betriebsfunktionen, für die die Zugriffsberechtigungsdaten (26) valide sind, zu erzeugen, wenn der dynamische Anteil (46) einer definierten Erwartungshaltung entspricht.

2. Zugriffssteuerungssystem nach Anspruch 1, wobei die Empfangseinrichtung (22) dazu eingerichtet ist, bei jedem Auslesen der Zugriffsberechtigungsdaten (26) von dem mobilen Datenträger (24) ein definiertes Muster als dynamischen Anteil den Zugriffsberechtigungsdaten (26) zu ergänzen.

3. Zugriffssteuerungssystem nach Anspruch 2, wobei das Muster eine Berechtigung, eine Seriennummer, einen Zähler, einen aktuellen Sitzungsschlüssel, einen oder mehrere vorherige Sitzungsschlüssel, eine Schlüssel-ID, einen absoluten Zeitwert und/oder einen relativen Zeitwert umfasst, insbesondere eine definierte Kombination einer oder mehrerer der vorgenannten Elemente ist.

4. Zugriffssteuerungssystem nach einem der Ansprüche 1 bis 3, wobei die Empfangseinrichtung (22) dazu eingerichtet ist, den dynamischen Anteil (46) nur dann zu erzeugen, wenn die Zugriffsberechtigungsdaten (26) vollständig und/oder als gültig ausgelesen worden sind.

5. Zugriffssteuerungssystem nach einem der Ansprüche 1 bis 4, wobei die Empfangseinrichtung (22) die dynamisierten Zugriffsberechtigungsdaten (48) einkanalig an die Zugriffssteuerungseinrichtung (28) sendet.

6. Zugriffssteuerungssystem nach einem der Ansprüche 1 bis 5, wobei die Empfangseinrichtung (22) eine Leseeinrichtung (34) aufweist, um den mobilen Datenträger (24) über eine Funkschnittstelle (36) auszulesen.

7. Zugriffssteuerungssystem nach einem der Ansprüche 1 bis 6, ferner umfassend eine Auswahleinrichtung (18) zur Auswahl einer oder mehrerer Betriebsfunktionen durch den Nutzer, wobei die Zugriffssteuerungseinrichtung (28) ferner eingerichtet ist, die Auswahleinrichtung (18) so zu konfigurieren, dass diese dem Nutzer nur Zugriff auf die freigegebenen Betriebsfunktionen gewährt.

8. Zugriffssteuerungssystem nach Anspruch 7, wobei die Zugriffssteuerungseinrichtung (28) dazu eingerichtet ist, die Auswahleinrichtung (18) zu sperren, wenn sich der dynamische Anteil (46) für einen definierten Zeitraum nicht ändert und/oder der dynamische Anteil (46) nicht der definierten Erwartungshaltung entspricht.

9. Zugriffssteuerungssystem nach einem der Ansprüche 1 bis 8, ferner aufweisend eine fehlersichere Steuereinheit (20), die eingerichtet ist, einen fehlersicheren Betrieb der technischen Anlage (12) zu gewährleisten und eine Sicherheitsfunktion auszuführen, wobei die Zugriffssteuerungseinrichtung (28) dazu eingerichtet ist, die Freigabe an die fehlersichere Steuereinheit (20) zu übertragen, so dass die fehlersichere Steuereinheit (20) die technische Anlage (12) in Abhängigkeit der Freigabe steuert, insbesondere die technische Anlage (12) in einen sicheren Zustand überführt, wenn keine Freigabe gesendet wird.

10. Zugriffssteuerungssystem nach Anspruch 9, wobei die Zugriffssteuerungseinrichtung (28) ein integraler Bestandteil, eine Baugruppe und/oder ein Modul, insbesondere ein Softwaremodul, der fehlersicheren Steuereinheit (20) ist.

11. Zugriffssteuerungseinrichtung (28) zur Steuerung eines Zugriffs eines Nutzers auf eine oder mehrere Betriebsfunktionen einer technischen Anlage (12), umfassend:
eine Schnittstelle zum Empfangen von dynamisierten Zugriffsberechtigungsdaten (48), die von einem mobilen Datenträger (24) kontinuierlich ausgelesene Zugriffsberechtigungsdaten (26) sowie einen sich kontinuierlich ändernden dynamischen Anteil (46) umfassen, und
eine Verarbeitungseinheit, die dazu eingerichtet ist, die Zugriffsberechtigungsdaten (26) zu validieren,
**dadurch gekennzeichnet, dass** die Zugriffssteuerungseinrichtung (28) dazu eingerichtet ist, eine Freigabe für diejenigen Betriebsfunktionen, für die die Zugriffsberechtigungsdaten (26) valide sind, zu erzeugen, wenn der dynamische Anteil (46) einer definierten Erwartungshaltung entspricht.

12. Zugriffssteuerungsverfahren (100) zur Steuerung eines Zugriffs eines Nutzers auf eine oder mehrere Betriebsfunktionen einer technischen Anlage (12) mit den Schritten:
- kontinuierliches Auslesen von Zugriffsberechtigungsdaten (26) von einem mobilen Datenträger (24) durch eine Empfangseinrichtung (22); und
- Validieren der Zugriffsberechtigungsdaten (26) durch eine Zugriffssteuerungseinrichtung (28),
**dadurch gekennzeichnet, dass** die Empfangseinrichtung (22) die Zugriffsberechtigungsdaten (26) kontinuierlich um einen dynamischen Anteil (46) ergänzt, um dynamisierte Zugriffsberechtigungsdaten (48) zu erhalten, und diese an die Zugriffssteuerungseinrichtung (28) sendet, und dass
die Zugriffssteuerungseinrichtung (28) die dynamisierten Zugriffsberechtigungsdaten (48) mit den Zugriffsberechtigungsdaten (26) und dem dynamischen Anteil (46) von der Empfangseinrichtung (22) empfängt und eine Freigabe für diejenigen Betriebsfunktionen, für die die Zugriffsberechtigungsdaten (26) valide sind, erzeugt, wenn der dynamische Anteil (46) einer definierten Erwartungshaltung entspricht.

13. Computerprogramm, umfassend Befehle, die bei der Ausführung des Programms durch einen Computer diesen veranlassen, das Verfahren nach Anspruch 12 auszuführen.

## Claims

1. An access control system (10) for controlling access of a user to one or more operating functions of a technical installation (12), comprising:
a receiving device (22) configured to continuously read access authorization data (26) from a mobile data medium (24); and
an access control device (28) configured to validate the access authorization data (26),
**characterized in that** the receiving device (22) is further configured to continuously add a dynamic portion (46) to the access authorization data (26) to obtain dynamic access authorization data (48) and to send the dynamic access authorization data (48) to the access control device (28), and **in that**
the access control device (28) is configured to receive the dynamic access authorization data (48) including the access authorization data (26) and the dynamic portion (46) from the receiving device (22) and to generate a release signal for those operating functions for which the access authorization data (26) is valid, if the dynamic portion (46) corresponds to a defined expectation.

2. The access control system according to claim 1, wherein the receiving device (22) is configured to add a defined pattern as said dynamic portion of the access authorization data (26) each time the access authorization data (26) is read from the mobile data medium (24).

3. The access control system according to claim 2, wherein the pattern comprises an authorization, a serial number, a counter, a current session key, one or more previous session keys, a key ID, an absolute time value and/or a relative time value, particularly the pattern being defined as a combination of one or more of the aforementioned elements.

4. The access control system according to any one of claims 1 to 3, wherein the receiving device (22) is configured to generate the dynamic portion (46) only when the access authorization data (26) has been read out completely and/or as valid.

5. The access control system according to any one of claims 1 to 4, wherein the receiving device (22) is configured to transmit the dynamic access authorization data (48) to the access control device (28) in a one-channel manner.

6. The access control system according to any one of claims 1 to 5, wherein the receiving device (22) comprises a reading device (34) for reading the mobile data medium (24) via a wireless interface (36).

7. The access control system according to any one of claims 1 to 6, further comprising a selector (18) for selection by the user of one or more operating functions, wherein the access control device (28) is further configured to set the selector (18) to grant the user access only to the authorized operating functions.

8. The access control system according to claim 7, wherein the access control device (28) is configured to block the selector (18) if the dynamic portion (46) does not change for a defined period and/or the dynamic portion (46) does not meet the defined expectation.

9. The access control system according to any one of claims 1 to 8, further comprising a fail-safe control unit (20) which is configured to ensure fail-safe operation of the technical installation (12) and to execute a safety function, wherein the access control device (28) is configured to transmit the release signal to the fail-safe control unit (20) so that the fail-safe control unit (20) controls the technical installation (12) based on the release signal, in particular wherein the fail-safe control unit (20) transfers the technical system (12) into a safe state if no release signal is sent.

10. The access control system according to claim 9, wherein the access control device (28) is an integral part, a component and/or module, in particular a software module, of the fail-safe control unit (20).

11. An access control device (28) for controlling access by a user to one or more operating functions of a technical installation (12), comprising:
an interface for receiving dynamic access authorization data (48) including access authorization data (26) continuously read from a mobile data medium (24) and a dynamic portion (46) that continuously changes; and
a processing unit configured to validate the access authorization data (26),
**characterized in that** the access control device (28) is configured to generate a release signal for those operating functions for which the access authorization data (26) is valid, if the dynamic portion (46) corresponds to a defined expectation.

12. An access control method (100) for controlling access of a user to one or more operating functions of a technical system (12), comprising:
- by a receiving device (22), continuously reading access authorization data (26) from a mobile data medium (24);
- by an access control device (28), validating the access authorization data;
**characterized in that** the receiving device (22) continuously adds a dynamic portion (46) to the access authorization data (26) to obtain dynamic access authorization data (48) and sends the dynamic access authorization data (48) to the access control device (28), and **in that**
the access control device (28) receives the dynamic access authorization data (48) including the access authorization data (26) and the dynamic portion (46) from the receiving device (22) and generates a release signal for those operating functions for which the access authorization data (26) is valid, if the dynamic portion (46) corresponds to a defined expectation.

13. A computer program comprising instructions which, when executed by a computer, cause the computer to perform the method of claim 12.

## Revendications

1. Système de commande d'accès (10) destiné à commander l'accès d'un utilisateur à une ou plusieurs fonctions d'exploitation d'une installation technique (12), ledit système comprenant :
un dispositif de réception (22) qui est conçu pour lire en continu des données d'autorisation d'accès (26) sur un support de données mobile (24), et
un dispositif de commande d'accès (28) qui est conçu pour valider les données d'autorisation d'accès (26),
**caractérisé en ce que** le dispositif de réception (22) est en outre conçu pour compléter en continu les données d'autorisation d'accès (26) avec une composante dynamique (46) afin d'obtenir des données d'autorisation d'accès dynamisées (48) et envoyer celles-ci au dispositif de commande d'accès (28), et **en ce que**
le dispositif de commande d'accès (28) est conçu pour recevoir les données d'autorisation d'accès dynamisées (48) avec les données d'autorisation d'accès (26) et la composante dynamique (46) du dispositif de réception (22) et pour générer une autorisation des fonctions d'exploitation, pour lesquelles les données d'autorisation d'accès (26) sont valables, si la composante dynamique (46) correspond à une attente définie.

2. Système de commande d'accès selon la revendication 1, le dispositif de réception (22) étant conçu pour compléter les données d'autorisation d'accès (26) avec un motif défini utilisé comme composante dynamique chaque fois que les données d'autorisation d'accès (26) sont lues sur le support de données mobile (24).

3. Système de commande d'accès selon la revendication 2, le motif comprenant une autorisation, un numéro de série, un compteur, une clé de session en cours, une ou plusieurs clés de session précédentes, un identifiant de clé, une valeur temporelle absolue et/ou une valeur temporelle relative, notamment une combinaison définie d'un ou plusieurs des éléments susmentionnés.

4. Système de commande d'accès selon l'une des revendications 1 à 3, le dispositif de réception (22) étant conçu pour générer la composante dynamique (46) uniquement lorsque les données d'autorisation d'accès (26) ont été lues complètement et/ou comme valides.

5. Système de commande d'accès selon l'une des revendications 1 à 4, le dispositif de réception (22) envoyant les données d'autorisation d'accès dynamisées (48) au dispositif de commande d'accès (28) sur un seul canal.

6. Système de commande d'accès selon l'une des revendications 1 à 5, le dispositif de réception (22) comportant un dispositif de lecture (34) destiné à lire le support de données mobile (24) par le biais d'une interface radio (36).

7. Système de commande d'accès selon l'une des revendications 1 à 6, comprenant en outre un dispositif de sélection (18) destiné à sélectionner une ou plusieurs fonctions d'exploitation par le biais de l'utilisateur, le dispositif de commande d'accès (28) étant en outre conçu pour configurer le dispositif de sélection (18) de telle sorte que celui-ci n'accorde à l'utilisateur qu'un accès aux fonctions d'exploitation autorisées.

8. Système de commande d'accès selon la revendication 7, le dispositif de commande d'accès (28) étant conçu pour bloquer le dispositif de sélection (18) si la composante dynamique (46) ne change pas pendant un intervalle de temps défini et/ou si la composante dynamique (46) ne correspond pas à l'attente définie.

9. Système de commande d'accès selon l'une des revendications 1 à 8, comprenant en outre une unité de commande à sécurité intégrée (20) qui est conçue pour assurer un fonctionnement à sécurité intégrée de l'installation technique (12) et pour assurer une fonction de sécurité, le dispositif de commande d'accès (28) étant conçu pour transmettre l'autorisation à l'unité de commande à sécurité intégrée (20) de sorte que l'unité de commande à sécurité intégrée (20) commande l'installation technique (12) en fonction de l'autorisation, en particulier l'installation technique (12) passant dans un état sûr si aucune autorisation n'est envoyée.

10. Système de commande d'accès selon la revendication 9, le dispositif de commande d'accès (28) étant une partie intégrante, un ensemble et/ou un module, notamment un module logiciel, de l'unité de commande à sécurité intégrée (20).

11. Dispositif de commande d'accès (28) destiné à commander l'accès d'un utilisateur à une ou plusieurs fonctions d'exploitation d'une installation technique (12), ledit dispositif comprenant :
une interface destinée à recevoir des données d'autorisation d'accès dynamisées (48) qui comprennent des données d'autorisation d'accès (26) lues en continu sur un support de données mobile (24) et une composante dynamique (46) variable en continu, et
une unité de traitement qui est conçue pour valider les données d'autorisation d'accès (26),
**caractérisé en ce que** le dispositif de commande d'accès (28) est conçu pour générer une autorisation pour les fonctions d'exploitation, pour lesquelles les données d'autorisation d'accès (26) sont valides, si la composante dynamique (46) correspond à une attente définie.

12. Procédé de commande d'accès (100) destiné à commander l'accès d'un utilisateur à une ou plusieurs fonctions d'exploitation d'une installation technique (12), ledit procédé comprenant les étapes suivantes :
- lire en continu des données d'autorisation d'accès (26) sur un support de données mobile (24) par le biais d'un dispositif de réception (22) ; et
- valider les données d'autorisation d'accès (26) par le biais d'un dispositif de commande d'accès (28),
**caractérisé en ce que** le dispositif de réception (22) complète en continu les données d'autorisation d'accès (26) avec une composante dynamique (46) afin d'obtenir des données d'autorisation d'accès dynamisées (48) et envoie celles-ci au dispositif de commande d'accès (28), et **en ce que**
le dispositif de commande d'accès (28) reçoit les données d'autorisation d'accès dynamisées (48) avec les données d'autorisation d'accès (26) et la composante dynamique (46) du dispositif de réception (22) et génère une autorisation pour les fonctions d'exploitation, pour lesquelles les données d'autorisation d'accès (26) sont valides, si la composante dynamique (46) correspond à une attente définie.

13. Logiciel, comprenant des instructions qui, lorsque le programme est exécuté par un ordinateur, ordonnent à celui-ci de mettre en œuvre le procédé selon la revendication 12.
